Europäisches Patentamt
European Patent Office
Office européen des brevets

(11) Publication number: **0 377 259 A1**

(12) **EUROPEAN PATENT APPLICATION**

(21) Application number: **89203325.9**

(22) Date of filing: **28.12.89**

(51) Int. Cl.[5]: **C08F 8/30, C08C 19/22, C08G 69/00**

(30) Priority: **02.01.89 NL 8900001**

(43) Date of publication of application: **11.07.90 Bulletin 90/28**

(84) Designated Contracting States: **AT BE CH DE ES FR GB IT LI NL SE**

(71) Applicant: **STAMICARBON B.V.**
**Mijnweg 1**
**NL-6167 AC Geleen(NL)**

(72) Inventor: **Koning, Cornelis Eme**
**Parkstrasse 18**
**NL-6436 EL Schinnen(NL)**
Inventor: **Fayt, Roger Michel André**
**Route du Condroz 144**
**B-4121 Neuville(BE)**
Inventor: **Van de Vondervoort, Elisabeth Wilhelmina Maria**
**Aldenhoven 6**
**NL-6093 HB Heythuysen(NL)**
Inventor: **Van Geenen, Albert Arnold**
**Merkelbeekerstrasse 82**
**NL-6441 KM Brunssum(NL)**
Inventor: **Teysie, Philippe**
**Avenue du Bois Imperial du Rognac 85**
**B-4121 Neuville(BE)**

(54) **Acyllactam-functional compounds and polylactam block copolymers derived therefrom.**

(57) The invention relates to conversion products of acyllactam-functional compounds, comprising compounds of the general formula:

$P - ( - A (-L-)_y - B (-L))_x$ (I)

where

A represents an oxygen atom or an -NH-group,

B represents one of the following groups:

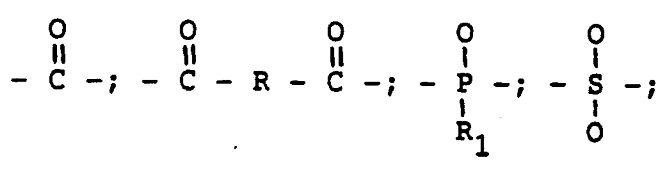

and where

R represents an alkyl, aralkyl, alkaryl or aryl group, where alkyl and alkyl bound in aralkyl or alkaryl may also be cycloalkyl,

$R_1$ may be a monoalkyl, monoaryl, monoarylkyl, monoalkoxy, monoaryloxy, monoarylkyloxy or halogen group,

P represents a residue of a polymer $P(AH)_x$ with a number-average molecular weight of at least 5000 with one or more OH or $NH_2$ groups, which polymer has been chosen from the group consisting of polyphenylene oxides, phenoxy resins, polyesters and polycarbonates with terminal OH groups and polymers containing one or more OH or $NH_2$ groups exclusively as a result of modification,

(-L-) represents an opened lactam ring,

(-L) represents an unopened lactam ring,

x is an integer higher than or equal to 1,

EP 0 377 259 A1

y is equal to 0 or 1.

The invention further relates to conversion products of acyllactams, to polylactam block copolymers derived therefrom by lactam polymerization on a lactam group and to the use of such block copolymers as compatibilizers for polyamide mixtures.

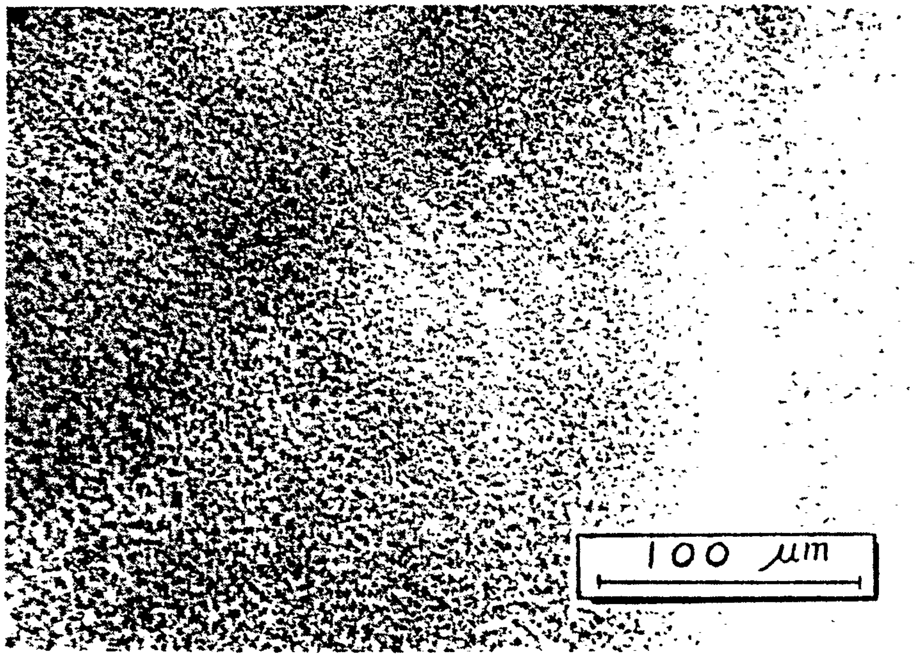


FIG. 2

# ACYLLACTAM-FUNCTIONAL COMPOUNDS AND POLYLACTAM BLOCK COPOLYMERS DERIVED THEREFROM

## BACKGROUND AND SUMMARY OF THE INVENTION

The present invention relates to acyllactam-functional compounds and to polylactam block copolymers derived therefrom by lactam polymerization on a lactam group. The present invention further relates to the use of such block copolymers as compatibilizers for polyamide mixtures.

Acyllactam-functional compounds are described, inter alia, in patents, EP-A-67693 and EP-A-67694. Acyllactam-functional compounds are described as being obtained in these patents by reacting a polyhydroxy compound with an acid halide and subsequently with lactam monomer. Examples of acid halides are carboxylic acid, phosphorylic acid or sulphonylic acid halide. The polyols used in EP-A-67693 and EP-A-67694 are preferably polyether polyols, polyester polyols and polybutadiene polyols.

In EP-A-67695 a description is provided of conversion products which are highly suited as activators or accelerators in the preparation of nylon block copolymers, particularly in the so-called RIM or RRIM systems, which require a rapid polymerization process. Such nylon block copolymers contain blocks of a polyamide.

Polyamides are widely known polycondensates of mostly aliphatic dicarboxylic acids with 4-12 carbon atoms with mostly aliphatic diamines with 4-14 carbon atoms and/or of lactams with 6-12 carbon atoms. Examples of polyamides are: polyhexamethylene adipamide (nylon 6,6), polyhexamethylene azelamide (nylon 6,9), polyhexamethylene sebacamide (nylon 6,10), polyhexamethylene lauramide (nylon 6,12), polytetramethylene adipamide (nylon 4,6), polycaprolactam (nylon 6) and polylaurinolactam (nylon 12). The dicarboxylic acids and/or the diamines may also be aromatic.

Polyamides may be built up also of two or more dicarboxylic acids and/or two or more diamines, or of two or more lactams and they may also consist of mixtures of two or more polyamides.

The uses of polyamides are very numerous. For certain uses it is often desirable for the properties of polyamides to be modified. Modification of properties is often achieved by synthesizing block copolymers consisting of one or more polyamide blocks and one or more blocks of a different kind of polymer. Thus hydrophobic blocks in, for instance, polycaprolactam are known, for instance, to be capable of abating the sometimes undesired hydrophilic nature thereof. Thus polylactam-polyether block copolymers, for instance, have a combination of properties that make them well suited for so-called engineering plastics.

On the other hand, polyamides or copolyamides have been mixed with other polymeric compounds for a diversity of uses. A well-known example thereof is polyamide-ABS. Often the components in such mixtures are not compatible, whereas for improving the properties or for obtaining desired properties the relevant components do have to be compatible.

In this connection compatibility is understood to mean either that a (co)polyamide can be homogeneously mixed with another polymeric compound or that the polymers can be mixed with each other in a very fine distribution, forming a stable mixture. In the process, a dispersion of one polymer (discontinuous phase) is usually formed in a matrix of the other polymer (continuous phase).

When a (co)polyamide is intimately mixed with a non-compatible polymer at such a high temperature that the polymers are melted, for instance in an extruder, it is possible to obtain a fine distribution, but the mixture is not stable. During further processing, for instance by injection-moulding, the loss of stability manifests itself in an undesired manner in that the fine distribution is lost again - coagulation of the dispersed phase occurs - in consequence of which the properties of the mixture deteriorate, at least become less good.

Now, by incorporating in the intended non-compatible compositions so-called compatibilizers it is possible to improve the dispersability of the components of these compositions and the stability of the dispersions.

Generally, compatibilizers reduce the surface tensions between the phases formed by the components, so that a finer dispersion can be obtained. Such fine dispersion is also stabilized by the compatibilizers. The compatibilizers are present substantially in the boundary surface between the phases and thus contribute to an improved adhesion between the phases. The mechanical and physical properties are improved by the compatibilizers, while the resulting stabilization of the dispersion is of major importance for the processing steps which follow, for instance injection-moulding.

The desired compatibility is generally obtained with minor amounts of compatibilizers of less than 15% (wt)

and mostly less than 10% (wt).

It is highly desirable to have good compatibilizers for mixtures of (co)polyamides with other polymers.

Now, compounds have been found having the general formula:

$P - [ - A (-L-)_y - B (- L)]_x$ (I)

where

A represents an oxygen atom or an NH group,

B represents one of the following groups:

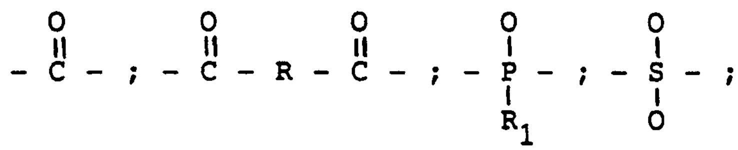

and where

R represents an alkyl, aralkyl, alkaryl or aryl group, where alkyl and alkyl bound in aralkyl or alkaryl may also be cycloalkyl,

$R_1$ may be a monoalkyl, monoaryl, monoarylkyl, monoalkoxy, monoaryloxy, monoaralkyloxy or halogen group,

P represents a residue of a polymer $P(AH)_x$ with a number-average molecular weight of at least 5000, with one or more OH or $NH_2$ groups, which polymer has been chosen from the group consisting of polyphenylene oxides, phenoxy resins, polyesters and polycarbonates with terminal OH groups and polymers containing one or more OH or $NH_2$ groups exclusively as a result of modification,

(-L-) represents an opened lactam ring,

(-L) represents a non-opened lactam ring

x is an integer higher than or equal to 1,

y is equal to 0 or 1.

It has also been found that the present compounds can be polymerized by lactam polymerization on the terminal lactam group to form polyamide block copolymers.

It has further been found that such block copolymers can be used very well as compatibilizers for mixtures of (co)polyamides with other polymers, particularly polymers of the grade which the polymer residue P has been derived from or polymers compatible with polymers of the grade which the residue P has been derived from.

Polymers that are to be mixed with each other need not be the same as the respective polymer blocks in the present block copolymers used as compatibilizer for that mixing process. These polymers do have to be compatible with one of the polymer blocks. Polylactam corresponding with the polylactam block is sufficiently compatible with, inter alia, polyamide 6, polyamide 6,6, polyamide 4,6 and polyamide 6,11.

Polyphenylene oxide is compatible with all styrene- containing polymers with a low comonomer content, for instance high-impact polystyrene, polystyrene, SMA with low maleic anhydride content, SAN with low acrylonitrile content, etc.

Polyphenylene oxide is sufficiently compatible also with, inter alia, tetramethylbisphenol A-polycarbonate and polysulphone based on tetramethyldichlorophenyl sulphone, etc.

A block copolymer according to the invention can, moreover, be used with a polyphenylene oxide block for making such mixtures compatible in which polyphenylene oxide, high-impact polystyrene, polystyrene, SMA with low maleic anhydride content and SAN with low acrylonitrile content is one of the components.

A block copolymer according to the invention can be used also with a polyphenylene oxide block for making such mixtures compatible in which tetramethylbisphenol-A-polycarbonate and polysulphone based on tetramethyldichlorophenylsulphone, etc. is one of the components.

Polymer block P in the present block copolymers will generally be a homopolymer block. It will be clear that one of the polymer components to be mixed can mostly, with no disadvantage, be a copolymer or graft polymer containing monomer units of the polymer block P or be a polymer modified in a different way. For instance, impact-resistant polystyrene and polyamide can be mixed using a block copolymer according to the invention containing a block homopolystyrene.

It will be clear that the invention is not limited hereto and that the above exposition has been included only by way of example.

The compounds having the above-mentioned general formula (I) can be prepared in a manner known per se by reacting a polymer having one or more -OH or $-NH_2$ groups, as defined hereinbefore, at an

elevated temperature of at least 80 °C, preferably between 90 °C and 250 °C, in the presence of a catalyst such as, for instance, an alkali metal lactamate, such as sodium or potassium lactamate, a Lewis acid, for instance magnesium stearate, magnesium chloride, zinc acetylacetonate, with an acyllactam. The chosen temperature must not be so high that decomposition products are formed. It is generally preferred not to choose temperatures higher than about 250 °C. Such a conversion is carried out in melted lactam, in a solvent or dispersant in which the polymer may be dissolved, partly dissolved or may not be dissolved, or in the mass, i.e. without solvent, dispersant or melted lactam. The catalyst/acyllactam molar ratios to be applied in the process may range from, for instance, 0.01 to 10, preferably 0.5 to 5. The molar ratio of acyllactam/OH or $NH_2$ groups of polymer $P(AH)_x$ may range from 10 to 0.5, preferably from 5 to 1, this ratio being most preferably equal to 1.

In this connection acyllactam is understood to mean reaction products of an acid chloride and a lactam, more particularly caprolactam.

Acyllactams are obtained according tc the reaction equation below:

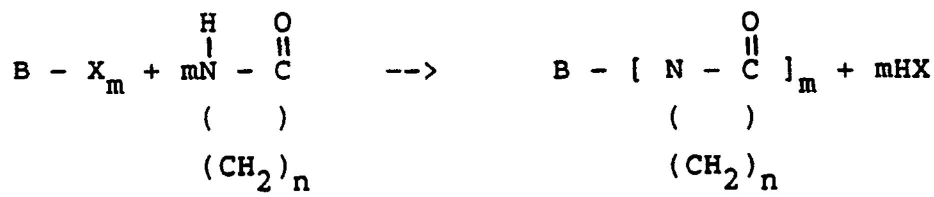

where B has the meanings defined hereinbefore, n is an integer from 3-11, and preferably 5, X is a halogen and m an integer higher than or equal to 2.

A polymer which residue P in the above-mentioned formula has been derived from can be represented by the general formula $P(AH)_x$ where P, A and x have the meanings mentioned hereinbefore. Such a polymer contains one or more ($x \geqq 1$) OH or $NH_2$ groups and has a number-average molecular weight of at least 5000, preferably between 10000 and 50000 and particularly between 20000 and 250000. Moreover, such a polymer must be chosen from the group mentioned above.

That group consists of:

a. polyphenylene oxides, these are polymers of substituted phenols. A summarized description of them is given in 'Encyclopedia of Polymer Science and Engineering', 1st impression, volume 10, pp. 92-110. Polymers of 2,6-dimethylphenol are produced on an industrial scale and are commercially available. The polyphenylene oxides referred to here are, however, not limited thereto. The polyphenylene oxides generally contain one or more phenolic hydroxyl groups.
In so far as such a group should not be present, it can readily be introduced in a manner known in the art. If so desired, the polyphenylene oxides can be modified by converting the phenolic OH group in a manner known in the art into an aliphatic OH group, for instance by conversion with an epoxy compound. Within the scope of the present invention polyphenylene oxides are understood to include modified polyphenylene oxides with aliphatic OH groups.

b. phenoxy resins, these are generally known amorphous polymers derived from diphenols and epichlorohydrin. A summary description of phenoxy resins is given in a general article by W.F. Hale in 'Encyclopedia of Polymer Science and Engineering', 1st impression, volume 10, pp. 111-122. Phenoxy resins are produced on an industrial scale and are commercially widely available. The OH groups in the phenoxy resins are mostly aliphatic. In so far as the OH groups should be wholly or partly aromatic, the phenoxy resin can be modified, if so desired, by converting aromatic OH groups into aliphatic OH groups, for instance by conversion with an epoxy compound.
The expression 'phenoxy resin' as used herein comprises all polymers comprised by the above-mentioned general article, as well as modifications thereof as referred to above.

c. polyesters or polycarbonates with terminal OH groups. Polyesters are known polycondensates, mostly built up from at least one aromatic dicarboxylic acid with 8-14 carbon atoms and from at least one diol. The aromatic dicarboxylic acid may have been replaced wholly or partly by an aliphatic or cycloaliphatic dicarboxylic acid and the diol may have been replaced wholly or partly by a diphenol. Polycarbonates are polycondensates of one or more diols or diphenols and carbonic acid. Like the polyesters, the polycarbonates are generally known. Both are produced on a large scale and are commercially available in many grades. If the polycondensation is carried out with an excess of diol or diphenol, the polyester or the polycarbonate will contain terminal OH groups. The OH groups need not exclusively occur at the ends of the chains. When small amounts of trivalent or multivalent acids, alcohols

or phenols are used in the polycondensation, shorter or longer side chains may be introduced on which an OH group may be present. Here again, any aromatic OH groups present can be converted, if so desired, in the manner known in the art, into aliphatic OH groups.

d. Polymers containing one or more OH or $NH_2$ groups exclusively as a result of modification, so-called OH-or $NH_2$- functionalized polymers.

Such polymers can be prepared by introducing into a polymer not containing any hydroxyl and amino groups one or more hydroxyl or amino groups and preferably one such group. Processes to achieve this are known from the state of the art. For instance, on a so-called living anionically polymerized polymer an epoxy compound or an aziridin compound can be made to act. Living polymer is understood to mean a polymer obtained by catalytic polymerization of a monomer without termination taking place. Examples hereof are the anionic polymerization of vinyl monomers, for instance styrene, isoprene, butadiene, acrylonitrile, alkyl acrylates, etc. with n-BuLi as initiator. The living anionic polymers obtained in the process can subsequently react with epoxy compounds or with aziridin compounds such as, for instance, ethylene oxide or aziridin, while forming $(RO)^{-}M^{+}$- or $(RNH)$-$M^{+}$- terminal groups, where $M^{+}$ represents a metal ion. After addition of a proton donor an OH- or $NH_2$-functionalized polymer is formed.

It will be quite clear to the average person skilled in the art that living polymers are not limited to the above-mentioned enumeration. From the state of the art many other examples are known.

Hydroxyl groups can be introduced also by, for instance, photo-oxidation of, for instance, unsaturated rubbers. See E.F.J. Duynstee and M.E.A.H. Mevis, European Polymer Journal 8 (1972) 1375. It is also possible for, for instance, vinyl monomers with minor amounts of a monomer containing a hydroxyl group, for instance hydroxyethylmethacrylate, to be copolymerized. Polymerization can also be effected using a radical-initiator containing a hydroxyl group. See J.C. Brosse et al Adv. Pol. Sc. 81 (1986) 167. By copolymerizing with, for instance, acrylamide it is possible to prepare a polymer functionalized with amine groups.

Examples of polymers that can be modified with one or more OH or $NH_2$ groups are olefin polymers and copolymers, such as polyethylene, polypropylene, etc. elastomeric or non-elastomeric ethylene-propylene copolymers or ethylene-propylene diene terpolymers, polydienes, such as polybutadiene, polyisoprene, polystyrene.

It will be clear that these have been mentioned only by way of example and that there are many other possibilities that will readily be envisaged by the average person skilled in the art.

Acid halides suitable for use within the scope of the present invention are acid halides as described in EP-A-67694. Examples of such acid halides are adipoylchloride, terephthaloylchloride, trimesoylchloride, oxalyl chloride, isophthaloylchloride, carbonylchloride, phosphoroxychloride, etc.

The acid chloride is reacted with lactam, preferably with caprolactam, in the presence of an acid-binding agent, such as a tertiary amine or pyridine, to form an acyllactam.

The acyllactam is subsequently reacted, in the manner described above, with a polymer with OH or $NH_2$ groups as defined hereinbefore. Compounds having the general formula (I) can be prepared also in a manner known per se by reacting a polymer having one or more -OH or -$NH_2$ groups, as defined hereinbefore, at an elevated temperature of at least 80 °C, preferably between 90 °C and 250 °C, in the presence of an acid-binding agent, such as a tertiary amine or pyridine, with an acid halide and subsequently with lactam. The product having the general formula (I) can then, in the presence of a lactam polymerization catalyst, be polymerized in melted lactam or in a suitable dispersant or in the mass to form a polyamide block copolymer with the general formula

$P - [ - A - (-L-)_y - B - L - PL ]_x,$

where the symbols A, B, P, - L - and y have the meanings defined hereinbefore and PL represents a polylactam block. If in the above-mentioned formula of the compounds according to the present invention x = 1, so-called two-block or AB-block copolymers are obtained having the general formula

$P - A - (-L-)_y - B - L - PL,$

where the symbols A, B, P, - L -, PL and y have the meanings mentioned hereinbefore, which is highly desirable for a block copolymer to be used as compatibilizer. In the interface between two non-compatible polymers such AB-block copolymers will be so oriented that the blocks will stick in the polymer components compatible therewith, so that not only a good stabilization, but also a strong bonding of the two components is obtained.

Compounds having the general formula (I) can be prepared also in a manner known per se by reacting a polymer having one or more -OH or -$NH_2$ groups, as defined hereinbefore, with an acid halide and subsequently with lactam. Suitable acid halides are acid halides as described in EP-A-67694.

The lactam polymerization on an acyllactam compound having the formula mentioned hereinbefore is carried out in a manner know per se in the presence of a basic lactam polymerization catalyst. Such

catalysts and such polymerizations are known in the art and are described, for instance, in EP-A-67693, EP-A-67694 and EP-A-67695. Examples thereof include: sodium lactamate, potassium lactamate and lactam-magnesium bromide or lactam-magnesium chloride. A small amount of catalyst is already sufficient, for instance less than 1 mole % calculated on the lactam to be polymerized, but larger amounts to, for instance, 3 moles % can be used also.

The weight ratios between lactam monomer and acyllactam compound may vary widely and are generally between 5 : 95 and 95 : 5 and preferably between 30 : 70 and 70 : 30. As the amount of lactam monomer polymerized on the acyllactam compound increases, the molecular weight of the polylactam block will be higher.

The polylactam block must have a number-average molecular weight of at least 1000 and preferably it is at least 4000. In general the number molecular weight will be 50,000 at most. Higher molecular weights are indeed possible, but do not produce any advantage. Customary modifications of the lactam polymerization to polyamide and in this case consequently to a polyamide block can be applied.

The chosen lactam for the formation of the polyamide block in the present block copolymers is preferably the same lactam as used for the acyllactam. More particularly caprolactam is used for both the acyllactam and the formation of the polyamide block. The addition of a small amount of pyrrolidone, however, accelerates the reaction.

In the preparation of the polymer mixture it may be essential for such preparation to be carried out in the presence of one or more compounds that are normally used in polymers, such as fillers, plasticizers, flame retardants, stabilizers, impact modifiers and reinforcing fibres such as asbestos, glass fibres or carbon fibres.

## BRIEF DESCRIPTION OF THE DRAWINGS

Further objects and advantages of the present invention will be better understood by carefully reading the following detailed description of the embodiments of the present invention in conjunction with the accompanying drawings, of which:

Fig. 1 is a phase-contrast microscope photo of a test specimen per example 16, enlarged 300x;

Fig. 2 is a phase-contrast microscope photo of a test specimen per example 16, enlarged 300x; and

Fig. 3 is a phase-contrast microscope photo of a test specimen from a comparative blend per example 16, enlarged 300x.

## DETAILED DESCRIPTION OF THE INVENTION

The invention is demonstrated with reference to the following examples, which are of an illustrative nature only and which are to be construed as non-limiting.

### Example 1

Hydroxy polystyrene, which will hereinafter for the sake of brevity be referred to as PS-OH, was synthesized according to the process described by Heuschen et al in Macromolecules 14 (1981) 242-246. To this end styrene dissolved in toluene was subjected under vacuum and at room temperature to anionic polymerization using sec. butyllithium as initiator. After polymerizing for about 16 hours, a 20% solution of a fivefold excess of ethylene oxide in benzene was added dropwise to the polymer cooled down to 0° C. The ethylene oxide was pre-dried using CaH and n-BuLi. After further processing of the reaction product, OH-functionalized polystyrene (PS-OH) was obtained. Three samples of PS-OH were synthesized: PS-OH-1 with a number-average molecular weight of 10,000; PS-OH-2 with a number-average molecular weight of 45,000 and PS-OH-3 with a number-average molecular weight of 50,000.

### Example 2

In a nitrogen atmosphere 10 g ($2.2 \times 10^{-4}$ moles) PS-OH-2, 78 mg ($2.2 \times 10^{-4}$ moles) isophthaloyl-

biscaprolactam (IBC) and 8 mg of a solution of magnesiumstearate in caprolactam, containing 6.7 x $10^{-6}$ moles magnesiumstearate in all, were dissolved in 40 ml dry toluene while being stirred. After about 10 ml toluene had been distilled off, in which process possible traces of water were distilled off along with the toluene by azeotropic distillation, the mixture was refluxed for 4 hours during stirring. A GPC analysis of a minimum amount of the PS-IBC-1 reaction product revealed that coupling had taken place only of one PS-OH-2 molecule to one IBC molecule. No coupling of two PS-OH-2 molecules to one bifunctional IBC molecule could be demonstrated (molecular weight distribution unchanged).

Subsequently, 5.5 g (4.9 x $10^{-2}$ moles) very well pre-dried caprolactam and 5 mg (2.1 x $10^{-4}$ moles) dry NaH were added to the reaction mixture and during stirring refluxing was continued for 16 hours more. After cooling, the reaction mixture was coagulated in methanol, upon which the resulting suspension was filtered off. The solid product filtered off was ground and subsequently extracted at room temperature for 16 hours using methanol for removing residual unconverted caprolactam. Subsequently, using toluene, extraction took place at room temperature for 16 hours in order to remove styrene homopolymer and unconverted PS-IBC-1. Finally, using trifluoroethanol, extraction took place at room temperature for 16 hours for the purpose of removing polycaprolactam.

The total yield of block copolymer was 58% calculated on PS-OH-2 and caprolactam. This block copolymer consisted for 69% (mass) of polystyrene and for 31% (mass) of polycaprolactam.
($M_{\text{polystyrene block}}$ = 45,000 and $M_{\text{polycaprolactam block}}$ = 20,000).

Example 3

In a nitrogen atmosphere 10 g (2.0 x $10^{-4}$ moles) PS-0H-3, 85 mg (2.4 x $10^{-4}$ moles) isophthaloyl-biscaprolactam (IBC), 5.0 g (4.4 x $10^{-2}$ moles) dry caprolactam and 8 mg of a solution of magnesium stearate in caprolactam, which contained 6.7 x $10^{-6}$ moles magnesium stearate in all, were dissolved in 40 ml dry toluene while being stirred. After about 10 ml toluene had been distilled off, in which process any traces of water were distilled off along with the toluene by azeotropic distillation, the mixture was refluxed for 4 hours during stirring. A GPC analysis of a minimum amount of the PS-IBC-2 reaction product revealed that coupling had taken place only of one PS-OH-2 molecule to one IBC molecule. No coupling of two PS-OH-2 molecules to one bifunctional IBC molecule could be demonstrated (molecular weight distribution unchanged).

Subsequently, 5 mg (2.1 x $10^{-4}$ moles) dry NaH was added to the reaction mixture and during stirring refluxing was continued for 6 hours more. After cooling, the reaction mixture was coagulated in methanol, upon which the resulting suspension was filtered off. The solid product filtered off was ground and subsequently extracted at room temperature for 16 hours using methanol for removing residual unconverted caprolactam. Subsequently, using toluene, extraction took place at room temperature for 16 hours in order to remove styrene homopolymer and unconverted PS-IBC-2. Finally, using trifluoroethanol, extraction took place at room temperature for 16 hours for the purpose of removing polycaprolactam. The total yield of block copolymer, calculated on PS-OH-3 and caprolactam, was 57%. The block copolymer consisted for 79% (mass) of polystyrene and for 21% (mass) of polycaprolactam.
($M_{\text{polystyrene block}}$ = 50,000; $M_{\text{polycaprolactam block}}$ = 13,000).

Example 4

Example 3 was repeated, but instead of 2.1 x $10^{-4}$ moles NaH, the same number of moles of lactammagnesium bromide (LMB) was used as catalyst for the polymerization of caprolactam. A solution of LMB in caprolactam was added, containing 1 mole LMB/kg solution. The other conditions remained the same. After extraction of the copolymerizate with methanol, toluene and trifluoroethanol the total yield of block copolymer calculated on PS-OH-3 and caprolactam was found to be 67%.

This block copolymer consisted for 71% (mass) of polystyrene and for 29% (mass) of polycaprolactam ($M_{\text{polystyrene block}}$ = 50,000 and $M_{\text{polycaprolactam block}}$ = 20,000).

Example 5

In a nitrogen atmosphere 10 g (2.0 x $10^{-4}$ moles) PS-OH-3, 214 mg (6.0 x $10^{-4}$ moles) isophthaloyl-biscaprolactam (IBC) and 8 mg of a solution of magnesiumstearate in caprolactam, containing 6.7 x $10^{-6}$

moles magensiumstearate in all, were dissolved in 40 ml dry toluene while being stirred. After about 10 ml toluene had been distilled off, in which process possible traces of water were distilled off along with the toluene by azeotropic distillation, the mixture was refluxed for 4 hours during stirring. The mixture was cooled and the reaction product of PS-OH-3 and IBC (= PS-IBC-3) was coagulated by pouring it out into methanol. The coagulated PS-IBC-3 was filtered off, washed with methanol and dried under vacuum at 50 °C. Caprolactam and excess IBC remained in the methanol phase. In a GPC analysis of a minimum amount of the PS-IBC-3, no coupling product of two PS-OH molecules to one bifunctional IBC molecule could be demonstrated.

Of the purified and dried PS-IBC-3, 9.8 g ($1.9 \times 10^{-4}$ moles) was dissolved in c. 40 ml dry toluene. After addition of 5.0 g ($4.4 \times 10^{-2}$ moles) caprolactam and 45 g ($2.1 \times 10^{-4}$ moles) lactammagnesium bromide (LMB), which was added in the form of a solution in caprolactam containing 1 mole LMB/kg solution, about 10 ml toluene was distilled off by azeotropic distillation for the purpose of removing traces of water from the reaction mixture. The mixture was subsequently refluxed for 6 hours during stirring.

After cooling, the reaction mixture was poured out into methanol, upon which the resulting suspension was filtered off. The solid product filtered off was ground and extracted in the manner described in examples 2 and 3.

The total yield of block copolymer, calculated on PS-IBC-3 and caprolactam, was 62%. This block copolymer consisted for 72% (mass) of polystyrene and for 28% (mass) of polycaprolactam
($M_{polystyrene\ block}$ = 50,000 and $M_{polycaprolactam\ block}$ = 19,000).

Example 6

The process described in example 3 was repeated with 34 g ($6.8 \times 10^{-4}$ moles) PS-OH-3, 255 mg ($7.2 \times 10^{-4}$ moles) IBC and 8.0 g ($7.1 \times 10^{-2}$ moles) caprolactam. For coupling IBC to PS-OH-3 the catalyst used was now 23.0 mg ($9.6 \times 10^{-4}$ moles) NaH instead of magnesiumstearate. After the coupling reaction (toluene reflux for four hours), again 23.0 mg ($9.6 \times 10^{-4}$ moles) NaH was added to the reaction mixture, which was refluxed during stirring for 16 hours.

After cooling, the reaction mixture was poured out into methanol, upon which the resulting suspension was filtered off. The solid product filtered off was ground and extracted in the manner described in examples 2 and 3. The total yield of block copolymer, calculated on PS-OH-3 and caprolactam, was 87%. This block copolymer consisted for 81% (mass) of polystyrene and for 19% (mass) of polycaprolactam
($M_{polystyrene\ block}$ = 50,000; $M_{polycaprolactam\ block}$ = 12,000).

Examples 7, 8 and 9

These examples were carried out in the same way as described in example 6. The amounts of reactants used and the data regarding the resulting block copolymer are mentioned in the table below.

| Example | 7 | 8 | 9 |
|---|---|---|---|
| PS-OH-3 | 17 g<br>$3.4x10^{-4}$ moles | 11.3 g<br>$2.3x10^{-4}$ moles | 29 g<br>$5.8x10^{-4}$ moles |
| IBC | 127 mg<br>$3.6x10^{-4}$ moles | 71 mg<br>$2.0x10^{-4}$ moles | 192 mg<br>$5.4x10^{-4}$ moles |
| Caprolactam | 16 g<br>$1.4x10^{-1}$ moles | 33 g<br>$2.9x10^{-1}$ moles | 3 g<br>$2.7x10^{-2}$ moles |
| NaH | (2x) 11.5 mg<br>(2x)$4.8x10^{-4}$ mls | (2x) 7.7 mg<br>(2x)$3.2x10^{-4}$ mls | (2x) 20.7 mg<br>(2x)$8.6x10^{-4}$ mls |
| yield block copolymer | 88% | 86% | 91% |
| % PS in block copolymer | 50% | 25% | 91% |
| % polycapro-lactam in block copolymer | 50% | 75% | 9% |

Table (continued)

| Example | 7 | 8 | 9 |
|---|---|---|---|
| $M_{PS}$ block | 50,000 | 50,000 | 50,000 |
| $M_{polycaprolactam}$ block | 50,000 | 150,000 | 5,000 |

Example 10

In the manner described in example 5 an amount of PS-b-polycaprolactam was synthesized in a two-part process. For the functionalization of 17 g ($3.4 \times 10^{-4}$ moles) PS-OH-3 were used 127 mg ($3.6 \times 10^{-4}$

moles) IBC, 1 g ($8.8 \times 10^{-3}$ moles) caprolactam and 11.5 mg ($4.8 \times 10^{-4}$ moles) NaH (4 hours, toluene reflux).

After further processing of the resulting PS-IBC, 16.8 g ($3.3 \times 10^{-4}$ moles) PS-IBC was dissolved in c. 80 ml dry toluene. After addition of 16 g ($1.4 \times 10^{-1}$ moles) well-predried caprolactam and 11.5 mg ($4.8 \times 10^{-4}$ moles) NaH, the mixture was refluxed during stirring for 16 hours.

After cooling, the reaction mixture was poured out into methanol, upon which the resulting suspension was filtered off. The solid product filtered off was ground and extracted in the manner described in examples 2 and 3. The total yield of block copolymer, calculated on PS-OH-3 and caprolactam, was 85%.

This block copolymer consisted for 50% (mass) of polystyrene and for 50% (mass) of polycaprolactam ($M_{polystyrene\ block}$ = 50,000 and $M_{polycaprolactam}$ block = 50,000). (Cf. example 7).

Example 11

In the manner described in example 5 an amount of PS-b-polycaprolactam was synthesized in a two-part process. For the functionalization of 17 g ($1.7 \times 10^{-3}$ moles) PS-OH-1 were used 720 mg ($2.0 \times 10^{-3}$ moles) IBC, 3 g ($2.7 \times 10^{-2}$ moles) caprolactam and 61.4 mg ($2.6 \times 10^{-3}$ moles) NaH (4 hours, toluene reflux).

After further processing of the resulting PS-IBC (see example 5), 16 g ($1.6 \times 10^{-3}$ moles) PS-IBC was dissolved in c. 80 ml dry toluene. After addition of 16 g ($1.4 \times 10^{-1}$ moles) well-predried caprolactam and of 61.4 mg ($2.6 \times 10^{-3}$ moles) NaH, the mixture was refluxed during stirring for 4 hours.

After cooling and further processing as described in example 3, the total yield of block copolymer, calculated on PS-OH-1 and caprolactam, was found to be 82%.

This block copolymer consisted for 49% (mass) of polystyrene and for 51% (mass) of polycaprolactam ($M_{polystyrene\ block}$ = 10,000 and $M_{polycaprolactam\ block}$ = 10,400).

Example 12

In an $N_2$ atmosphere 5.7 g (c. $3 \times 10^{-4}$ moles) poly(2,6-dimethyl-1,4-phenyleneoxide) (PPO) and 1.05 g ($2.9 \times 10^{-3}$ moles) IBC were dissolved during stirring and heating in 60 ml dry toluene. C. 10 ml toluene was distilled off by azeotropic distillation. Subsequently, 0.20 g of a 50% (mass) solution of magnesiumstearate in caprolactam, containing $1.7 \times 10^{-4}$ moles magnesiumstearate in all, was added, upon which again c. 5 ml toluene was distilled off by azeotropic distillation.

The reaction mixture was subsequently refluxed for 7 hours. After cooling, the reaction mixture was diluted with c. 150 ml toluene, filtered and the clear filtrate was precipitated in methanol for the purpose of removing caprolactam, excess IBC and catalyst residues. The PPO-IBC was filtered off, washed with methanol and dried under vacuum at 55 °C. The dried PPO-IBC was dissolved in toluene once again and coagulated in methanol.

The precipitated polymer was filtered off, washed with methanol and dried under vacuum at 55 °C.

Yield: 4.9 g PPO-IBC. An FTIR analysis of this product was really indicative of the presence of carboxyl groups originating from IBC.

Example 13

In a nitrogen atmosphere 4.0 g ($2 \times 10^{-4}$ moles) of the reaction product of PPO and IBC prepared according to example 12 and 4.5 g ($4 \times 10^{-2}$ moles) caprolactam were dissolved in 15 ml dry toluene. Subsequently, the toluene was distilled off, in which process any traces of water were distilled off along with the toluene by azeotropic distillation. After addition of 20 ml well-predried decalin (decahydronaphthalene) and 67 mg ($3.1 \times 10^{-4}$ moles) lactammagnesiumbromide (LMB), added as a solution in caprolactam containing 1 mole LMB per kg solution, the temperature of the reaction mixture was increased to 160 °C, upon which the mixture was stirred for $5\frac{1}{2}$ hours. The reaction mixture was subsequently cooled to room temperature. The solid product was separated off, ground and subsequently stirred in 200 ml chloroform for $1\frac{1}{2}$ hours. The resulting suspension was poured out into methanol, the precipitate was filtered off and subsequently extracted in the manner described in the preceding examples.

The yield of block copolymer was 4.7 g, which is 55% calculated on PPO-IBC coupling product and caprolactam. The block copolymer consisted for 86% (mass) of PPO and for 14% (mass) of polycaprolactam.

Example 14

In a nitrogen atmosphere 20.0 g (1 x $10^{-3}$ moles) 2,6-poly(2,6- dimethyl- 1,4-phenyleneoxide) (PPO) and 3.6 g (1 x $10^{-2}$ moles) IBC were dissolved during stirring and heating in a mixture of 100 g (0.9 mole) caprolactam and 50 ml dry toluene. The toluene was distilled off, in which process any traces of water were distilled off along with the toluene by azeotropic distillation. Subsequently, to the reaction mixture was added 1.04 g of a solution of sodiumlactamate in caprolactam, which contains 1.4 moles sodiumlactamate per kg solution. A total amount of 1.5 x $10^{-3}$ moles sodiumlactamate was added. The temperature of the reaction mixture was subsequently raised to 160 °C, upon which the mixture was stirred for 25 hours. The mixture was then cooled to c. 90 °C, upon which the hot solution was poured out into methanol. The precipitated reaction product of PPO and IBC, for reasons of convenience referred to as PPO-IBC, was filtered off, dried under vacuum at 55 °C, dissolved in chloroform and coagulated in methanol. After filtering, the PPO-IBC was dried again under vacuum at 55 °C. Yield: 18.8 g PPO-IBC.

An HPLC analysis of the reaction product showed that the reaction product of PPO and IBC contained less than 0.01% (mass) free IBC.

Example 15

In a nitrogen atmosphere 17.0 g (8.5 x $10^{-4}$ moles) of the PPO-IBC prepared according to example 14 and 25.0 g (2.2 x $10^{-1}$ moles) caprolactam were presented in a reaction flask together with 50 ml dry toluene. The toluene was distilled off, in which process any traces of water were distilled off along with the toluene by azeotropic distillation. Subsequently, 1.5 g of a lactammagnesiumbromide solution in caprolactam was added, which contains 1 mole LMB per kg solution, upon which the temperature of the reaction mixture was increased to 150 °C. After stirring for 5 minutes the reaction mixture was already highly viscous and 20 minutes after the addition of the LMB so much of the caprolactam was polymerized that stirring was no longer possible, and the reaction was discontinued. After cooling, the solid reaction product was removed from the reactor, ground and, in the manner described in the preceding examples, extracted with methanol, chloroform and formic acid for the purpose of removing respectively non-reacted caprolactam, homo-PPO and homopolycaprolactam.

The yield of block copolymer was 50% calculated on PPO-IBC and caprolactam. The block copolymer consisted for 43% (mass) of PPO and for 57% (mass) of polycaprolactam.

Example 16

On a two-roll mill 10 parts by weight of the diblock copolymer prepared according to example 7, consisting of 50% (mass) polystyrene and 50% (mass) polycaprolactam, was mixed for minutes at 230 °C with 25 parts by weight polystyrene (158 KR, BASF) and 75 parts by weight polyamide 6 (Ultramid B4R, BASF). Of the mixture thus prepared test bars were made by moulding in a mould for 3 minutes at 240 °C. From the test bars test specimens with a thickness of 5 µm were cut.

Fig. 1 is a phase-contrast microscope photo of such a specimen enlarged 300x.

In the manner described above test bars were subsequently made from a mixture of 25 parts by weight 158 KR polystyrene, 75 parts by weight Ultramid B4R polyamide 6 and 10 parts by weight of the block copolymer of example 9, which consists of 91% (mass) polystyrene and 9% (mass) polycaprolactam. From these test bars, too, test specimens with a thickness of 5 µm were cut.

Fig. 2 is a phase-contrast microscope photo of such a specimen enlarged 300x.

Finally, for the purpose of comparison, the above procedure was repeated for a 25/75 158 KR polystyrene/Ultramid B4R polyamide blend, but now without a compatibilizer being added.

Fig. 3 is a phase-contrast microscope photo of a test specimen from this comparative blend, having a thickness of 5 µm, enlarged 300x. According to the invention (Figs. 1 and 2) a much finer dispersion is obtained.

Example 17

Of the two mixtures according to example 16 and of the comparative mixture, which did not contain any block copolymer according to examples 7 and 9, standard bars were made for tensile testing purposes. Of all three specimens the yield stress ($\sigma Y$) and the breaking strength ($\sigma B$) were measured. As shown in the table below, the values $\sigma Y$ and $\sigma B$ of the specimens with compatibilizer are significantly higher than the values $\sigma Y$ and $\sigma B$ of the comparative specimen without compatibilizer.

TABLE

| Polyamide 6 | PS-b-Polycaprolactam | PS-b-Polycaprolactam | $\sigma Y$ ($N/mm^{-2}$) | $\sigma B$ ($N/mm^{-2}$) | Polystyrene |
|---|---|---|---|---|---|
| Ultramid B4R | (ex.7; 50%m PS) | (ex.9; 91%m PS) | 158 | K | R |
| | (pts(wt)) | (pts(wt)) | (pts(wt)) | (pts(wt)) | |
| | 25 | 75 | 10 | - | 59.7 |
| | 56.1 | 25 | 75 | - | 10 |
| | 70.2 | 71.1 | 25 | 75 | - |
| | - | 43.8 | 42.5 | | |

Example 18

On a twin-screw extruder 750 g StanylR TW 300 (= Nylon 4.6, DSM), 750 g poly(2,6- dimethyl)-1,4-phenyleneoxide (= PPO) and 30 g polystyrene-b-polycaprolactam block copolymer of example 6 (81% (mass) polystyrene and 19% (mass) polycaprolactam) were intimately mixed for 2 to 3 minutes at a temperature of 310° C. The blend test bars were injection-moulded. The cryo-fracture surface of these test bars showed dispersed particles with a diameter of 1-6 µm according to SEM photos. For the purpose of comparison the above process was repeated without adding a compatibilizer. The cryo-fracture surfaces of the test bars of this comparative material showed dispersed particles with a diameter of 2-16 µm. For a 50/50 PPO/Nylon 4.6 blend, too, a finer dispersion is obtained according to the invention.

While only a few exemplary embodiments of this invention have been described in detail, those skilled in the art will recognize that there are many possible variations and modifications which may be made in the exemplary embodiments while yet retaining many of the novel and advantageous features of this invention. Accordingly, it is intended that the following claims cover all such modifications and variations.

## Claims

1. Conversion products of acyllactam-functional compounds, comprising compounds of the general formula:

$P - ( - A (-L-)_y - B (-L))_x$ (I)

where

A represents an oxygen atom or an -NH-group,

B represents one of the following groups:

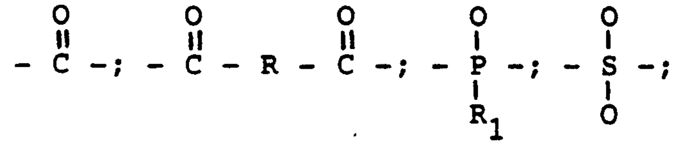

and where

R represents an alkyl, aralkyl, alkaryl or aryl group, where alkyl and alkyl bound in aralkyl or alkaryl may also be cycloalkyl,

$R_1$ may be a monoalkyl, monoaryl, monoarylkyl, monoalkoxy, monoaryloxy, monoarylkyloxy or halogen group,
P represents a residue of a polymer $P(AH)_x$ with a number-average molecular weight of at least 5000 with one or more OH or $NH_2$ groups, which polymer has been chosen from the group consisting of polyphenylene oxides, phenoxy resins, polyesters and polycarbonates with terminal OH groups and polymers containing one or more OH or $NH_2$ groups exclusively as a result of modification,
(-L-) represents an opened lactam ring,
(-L) represents an unopened lactam ring,
x is an integer higher than or equal to 1,
y is equal to 0 or 1.

2. Polyamide block copolymers consisting of one or more polyamide blocks and another polymer block, comprising copolymers of the general formula:

$P - ( - A - (-L-)_y - B - L - PL )_x$

where the symbols A, B, P, L, x and y have the meanings defined in claim 1 and PL represents a polylactam block.

3. Polyamide block copolymers according to claim 2, characterized by the general formula:

$P - A - (-L-)_y - B - L - PL$

where the symbols A, B, P, L and y have the meanings defined in claim 1 and PL represents a polyactam block.

4. Compatibilizers for mixtures of a polyamide with another polymer compatible with P comprising block copolymers according to claim 2.

5. Mixture of a polystyrene and a polyamide, wherein it contains 15% (wt) at most of a polyamide block copolymer according to claim.

6. Mixture according to claim 5, wherein it contains 15% (wt) at most of a polyamide block copolymer according to claim 2, while P in the formulas mentioned hereinbefore represents a polystyrene residue.

7. Mixture of a polyphenylene oxide or a phenoxy resin and a polyamide, wherein it contains 15% (wt) at most of a polyamide block copolymer according to claim 2.

8. Mixture according to claim 7, wherein it contains 15% (wt) at most of a polyamide block copolymer according to claim 2, while P represents in the formulas mentioned hereinbefore a polyphenylene oxide residue or a phenoxy resin residue.

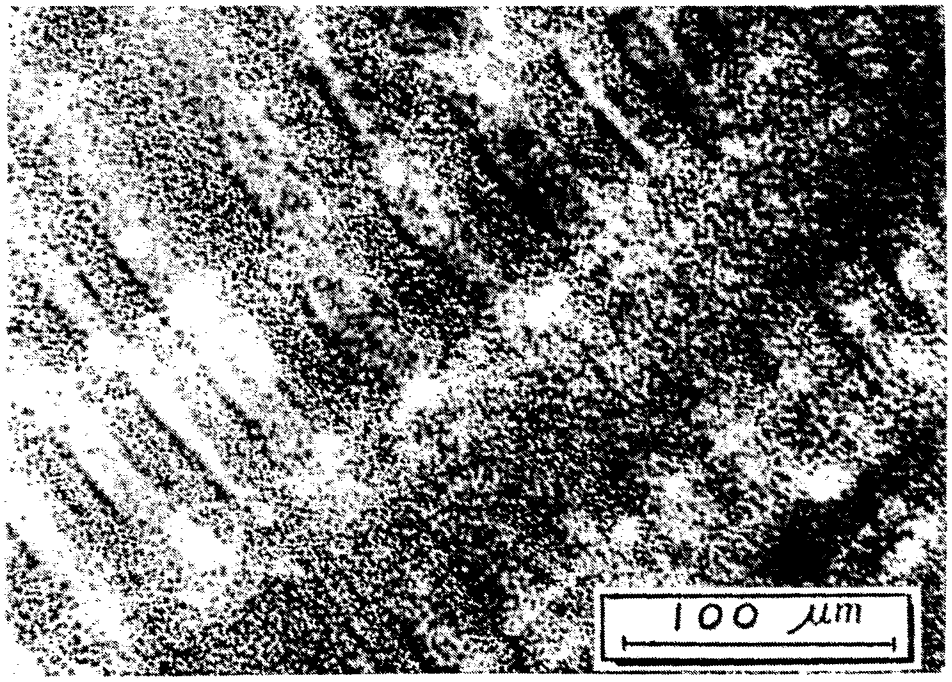


FIG. 1

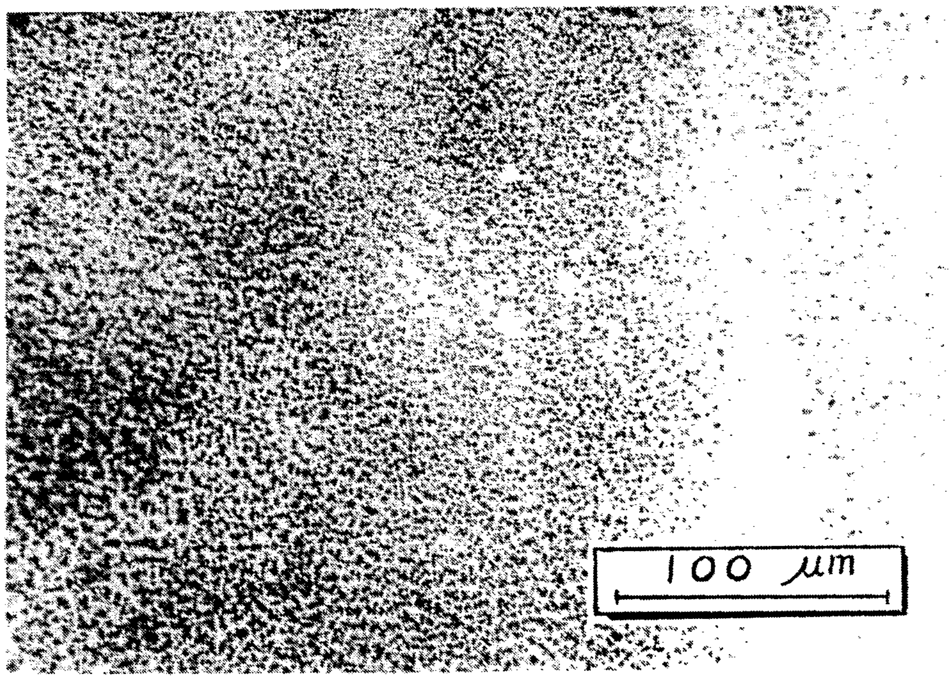


FIG. 2

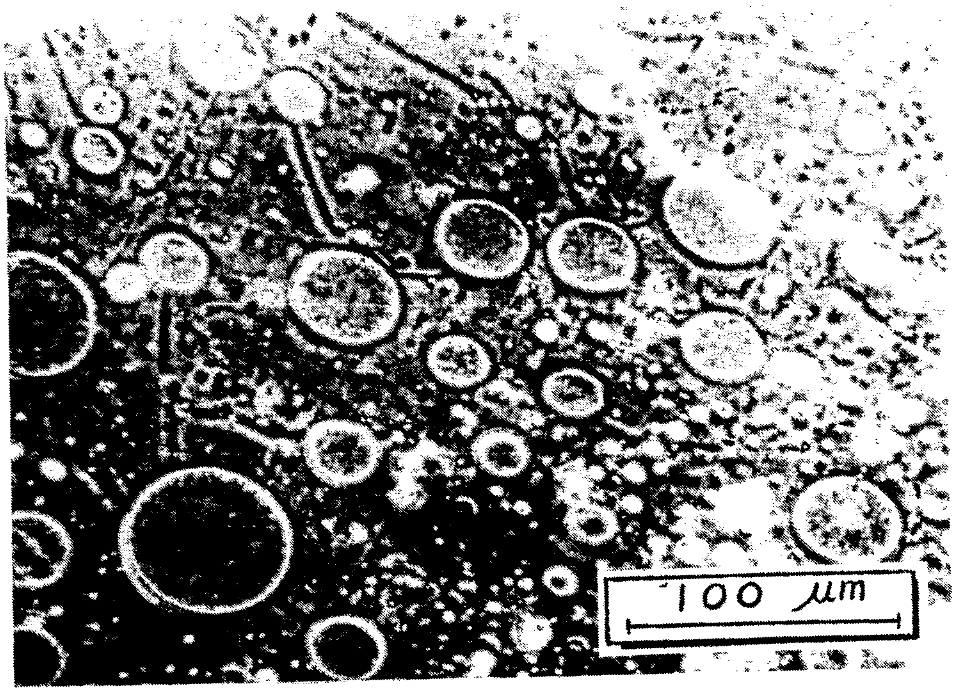


FIG. 3

European Patent Office

# EUROPEAN SEARCH REPORT

Application Number

EP 89 20 3325

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 241 100 (DSM RIM NYLON V.O.F.)<br>* Claims 1-13 *<br>--- | 1 | C 08 F 8/30<br>C 08 C 19/22<br>C 08 G 69/00 |
| A | EP-A-0 194 362 (STAMICARBON)<br>* Claims 1-4 *<br>--- | 1 | |
| A | EP-A-0 134 616 (STAMICARBON)<br>* Claims 1-9 *<br>--- | 1 | |
| A | EP-A-0 156 079 (SUMITOMO CHEMICAL)<br>* Claims 1-6 *<br>--- | 1 | |
| A | US-A-3 136 738 (R.M. HEDRICK)<br>* Claim 1; columns 4,5 *<br>--- | 1 | |
| A | DE-B-1 258 604 (HOECHST)<br>* Claim 1; columns 3,4 *<br>----- | 1 | |
| | | | TECHNICAL FIELDS SEARCHED (Int. Cl.5) |
| | | | C 08 F<br>C 08 C<br>C 08 G |

The present search report has been drawn up for all claims

| Place of search | Date of completion of the search | Examiner |
|---|---|---|
| THE HAGUE | 21-03-1990 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)